# EUROPEAN PATENT APPLICATION

(11) **EP 2 239 700 A1**
(43) Date of publication of application: **13.10.2010**
(21) Application number: 09152799.4
(22) Date of filing: 13.02.2009
(51) Int. Cl.: G06Q 30/00

(54) **A system and method for determining user response to wireless messages**

(71) Applicant: Rapid Mobile Media Ltd., Edinburgh EH2 3ES (GB)
(72) Inventor: Marshall, Richard, Edinburgh EH2 3ES (GB)
(74) Representative: Walaski, Jan Filip

(57) **Abstract**

A system and method for determining user response to wireless messages, comprising means for generating a wireless message including first content to be transmitted, means for adding second content to the message, the second content including a link to third content and means for transmitting the message to the user, wherein, in response to activation of the link, information regarding link activation is arranged to be recorded in a storage means. The link may be a URL or a telephone number of a redirection server that deals with redirection to the third content as well as logging of user responses.

## Description

The present invention relates to wireless messaging, particularly but not exclusively to a system and method for tracking user responses to wireless messages.

Wireless messaging to mobile devices, including but not limited to SMS messages, is widely used by organisations to provide a variety of services to users. Alert services providing information to their users via wireless messaging often subsidise these services by including advertising with the messages. The service providers are, however, unable to measure user response to their messages, whereas advertisers typically require tracking mechanisms to prove that their advertising is effective.

Embodiments of the present invention aim to provide a method by which user response can be measured.

According to an aspect of the invention, there is provided a system for determining user response to wireless messages, comprising means for generating a wireless message including first content to be transmitted, means for adding second content to the message, the second content including a link to third content, and means for transmitting the message to the user, wherein, in response to activation of the link, information regarding link activation is arranged to be recorded in a storage means.

The first content may be an alert message sent to a subscriber's mobile device. The second content may be an advertising link, or a link embedded in advertisement text. The link may include a URL of a redirection server to which the user is initially transferred. The link may alternatively be a telephone number of a call redirection server.

The third content may be a link to an advertising website or other promotional address. The third content may be a URL, or a telephone number, for example for an advertiser's call centre.

The link may further include a reference to the third content, where the third content is stored in a database. For example, a content server determines an appropriate item of content, based on a user id or other contextual information sent from a message server, and stores the address of the content item in a database. The content server creates a unique identity for the content item and encodes the unique identity. The content server is further arranged to append the encoded unique identity to the address of a redirection server to generate the link and to provide the link to the message server.

In response to the link being activated, the redirection server is arranged to decode the encoded identity and to retrieve the third content, for example the URL of the action to be taken by the user, from the database, based on the decoded identity.

The redirection server is further arranged to store information that the link has been activated, in other words to log the click through, for example by sending a message to the advertising server every time it receives a redirection request.

The information may be logged against the identity of a user, or without a user identity.

Where the link is the telephone number of the redirection server, the user's telephone number is used to reference the third content in the database. In response to receipt of a call at the redirection server from the user's telephone number, the redirection server uses the user's telephone number to look up the third content in the database, wherein the third content may include a telephone number for the advertiser's call centre.

According to a further aspect of the invention, there is provided a method of determining user response to wireless messages, comprising generating a wireless message including first content to be transmitted, adding second content to the message, the second content comprising a link to third content, transmitting the message to the user and in response to activation of the link, storing information regarding the link activation.

The step of storing information regarding the link activation may comprise logging click throughs, where the receiver of the wireless message clicks on the link, and is initially routed to the redirection server. The redirection server may both arrange for the click through to be logged, and redirect the call or link to an appropriate endpoint that has been preselected and stored in a database.

According to a still further aspect of the invention, there is provided a content server, the content server being configured to receive a request for content from a message server, to select the content, to store a reference to the content in a database, to generate a link to the reference in the database and to return the link to the message server.

The content server may be an advertisement server.

Embodiments of the invention will now be described by way of example, with reference to the accompanying drawings, in which:
Figure 1 shows a typical structure of a server, which forms the basis of the message,
advertising and redirector servers shown in Figure 2;
Figure 2 shows a system according to an embodiment of the invention;
Figure 3 shows a method of operating the system of Figure 2;
Figure 4 shows a system according to another embodiment of the invention;
Figure 5 shows a method of operating the system of Figure 4;
Figure 6 shows an example of a wireless message incorporating a URL; and
Figure 7 shows an example of a wireless message incorporating a telephone number.

Embodiments of the present invention provide a mechanism by which advertisements or other content added to messages can include either a URL or a telephone number. A record is made in a database as to whether the person receiving the message clicked the URL or made a voice call to the telephone number. For example, for a person subscribing to a wireless information service, such as sports information, the service provider typically includes an advertisement after the main content of the message. The advertisement may include an invitation to take some action, in the form of either a URL or a telephone number, which takes the user to further content provided by, or associated with, the advertiser. A proportion of the users will act on the invitation. For the advertiser, it is important to know how many users have acted as a result of receiving the link in the wireless message.

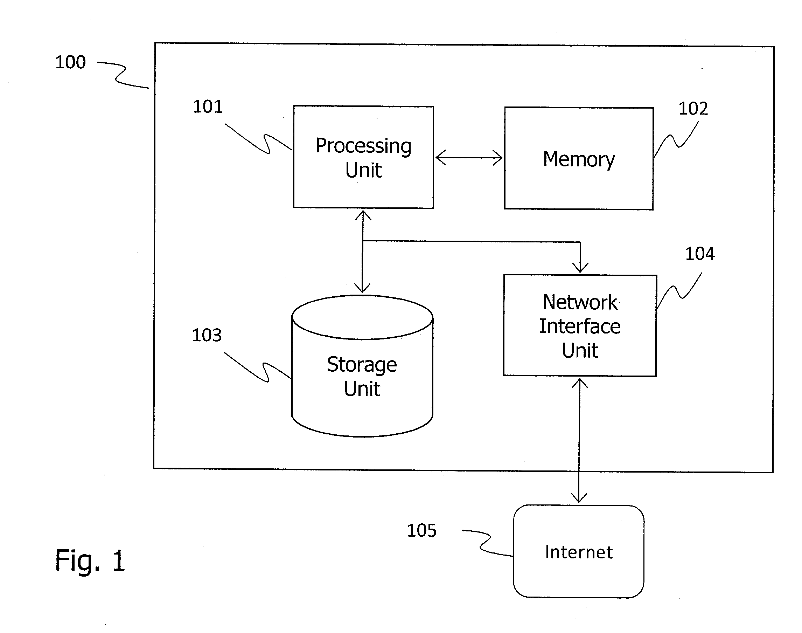

Referring to Figure 1, a typical server includes a processing unit 101, a memory 102, a storage unit 103 and a network interface unit 104 for connecting to the Internet 105. It will be apparent to the skilled person that the server would also include a variety of other components to enable it to fulfil its functions. These are well known in the art and will not be described in detail.

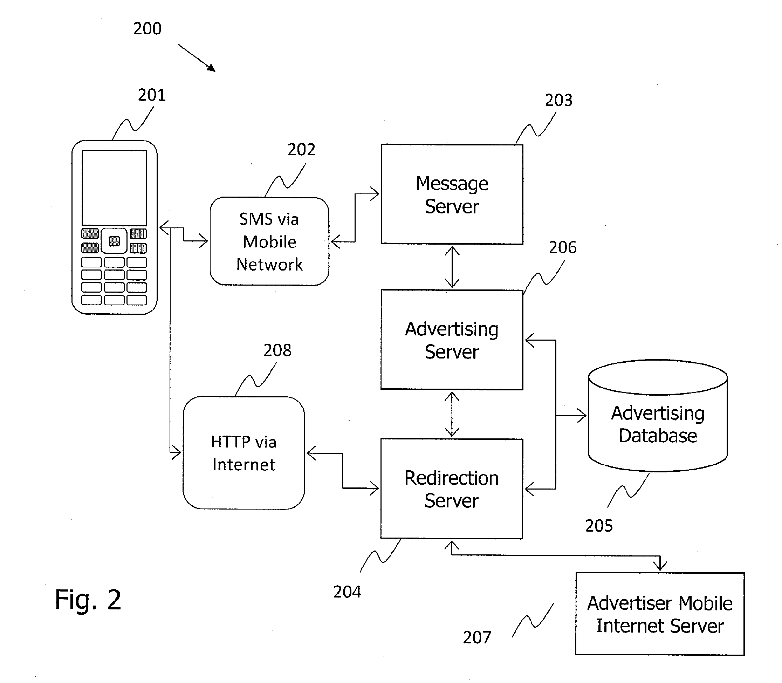

Referring to Figure 2, in a first embodiment of the invention 200, taking the case of an advertisement with an embedded URL, a service provider wishes to send a wireless message to a user's mobile device 201 via a mobile network, using, for example, an SMS message 202. The system according to the first embodiment comprises a message server 203, a redirection server 204, an advertising database 205 and an advertising server 206, linked to the advertiser's mobile internet server 207.

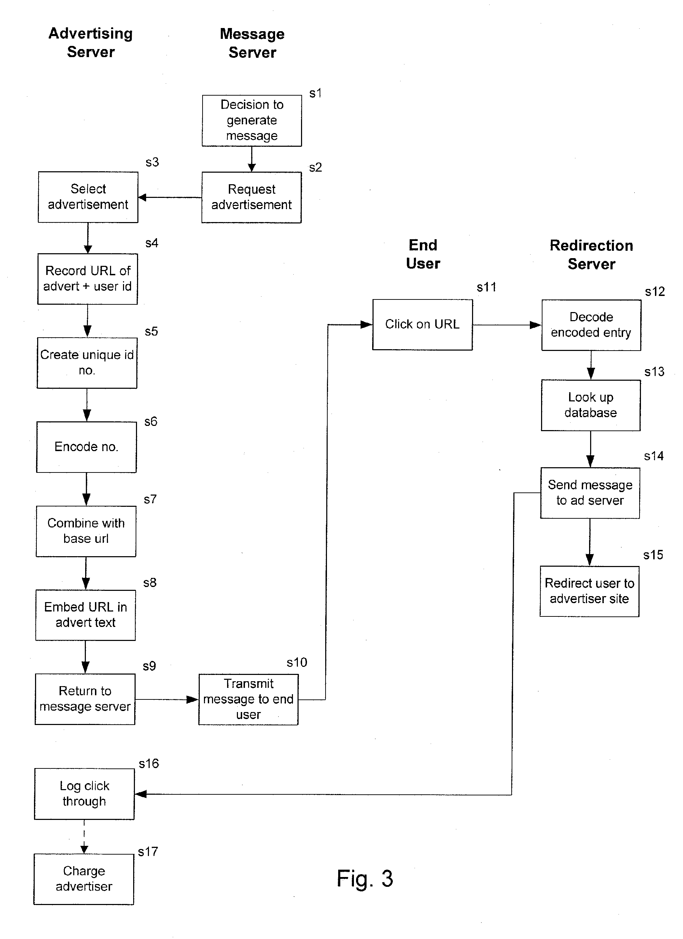

Referring to Figure 3, the message server 203 sending out the wireless message, such as an alert when a soccer goal has been scored (step s1), requests an advertisement from the advertising server 206 (step s2). The request may include either the phone number of the subscriber or a unique identifier for that subscriber, as well as information permitting a contextual selection of an appropriate advert.

The advertising server 206 selects an appropriate advert with associated URL (step s3) and records in its database 205 an entry with the identity of the advert, the URL, and the phone number or unique identifier of the end user (step s4). The URL stored in the database 205 points to the address of content within the advertiser's mobile internet server 207, or, in other words, is a link to the action that the user is going to take. The user id may be appended to the end of the URL, so that when the user is eventually redirected to the URL, as described in detail below, the user id is transferred to the advertiser's website and may be used to automatically log in to that website, assuming, for example, prior registration.

The advertising server 206 then creates a unique number (step s5) to identify this database entry. This unique number is encoded in base 64 or using some other suitable encoding scheme (step s6), and combined with a base URL to create a short, unique URL for that specific advert (step s7). The base URL is the address of the redirection server 204 which is linked to the advertising server database 205 and the advertiser's mobile internet server 207. The complete short URL is then embedded in the advertisement text (step s8) and returned to the message server (step s9).

The message server 203 transmits the message with embedded advertisement to the end user (step s10) via SMS or by another wireless transmission means. If the advertisement interests the end user, he or she can click on the short URL which will open the phone browser to make a connection (208) over the Internet pointing to the redirection server 204 (step s11). The redirection server 204 decodes the base 64 number (step s12) and uses the result to look up the database entry for the original advert (step s13). It then sends a message to the advertising server 206 (step s14) that the user, identified by phone number or unique identifier, has clicked on the advert, before redirecting the user to the URL stored in the database entry (step s15), which is, for example, advertising content within the advertiser's mobile internet server 207. The advertising server logs the click through (step s16) and can then charge the advertiser and pay the message service provider according to the number of actual clicks in response to the advert (step s17).

In an alternative embodiment of the invention, information identifying the specific user is not provided. For example, the message server 203 requests an advertisement to cover one or more users and the advertising server stores in the database 205 the number of users for whom the message is intended. There is only a single link for all of the messages. When the users click on the link, the number of clicks is recorded and counted up in the database.

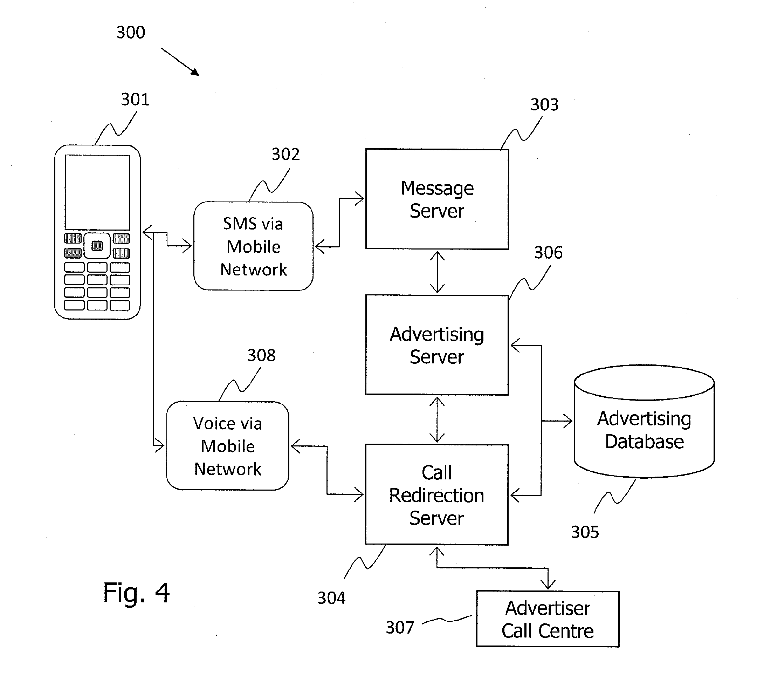

Figure 4 illustrates a similar mechanism for use with voice calls to a telephone number, described in a further embodiment of the invention 300. In this case, the system comprises a message server 303, a call redirection server 304, an advertising database 305 and an advertising server 306. The call redirection server links to the advertiser call centre 307.

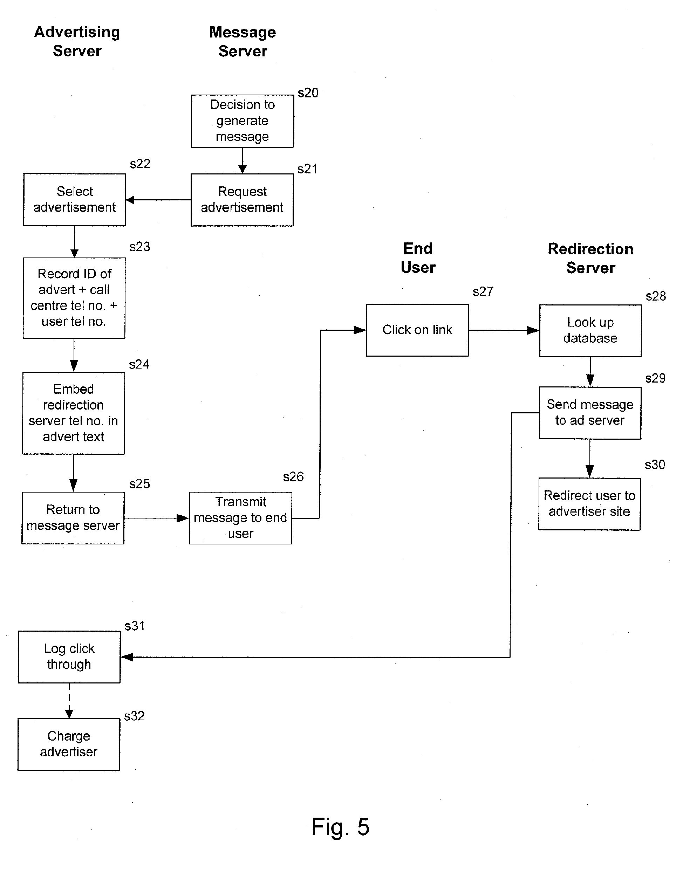

Referring to Figure 5, the message server 303 sending out the wireless message (step s20) requests an advertisement from the advertising server 306 (step s21). This request includes the telephone number of the subscriber, as well as information permitting a contextual selection of an appropriate advert.

The advertising server 306 selects (step s22) an appropriate advert with associated telephone number, typically the advertiser's existing call centre 307, and records (step s23) in its database 305 an entry with the identity of the advert, the associated telephone number, and the telephone number of the end user. The telephone number of a call redirection server 304 is then embedded in the advert text (step s24) and returned to the message server (step s25).

The message server 303 transmits the message with embedded advertisement to the end user (step s26). If the advertisement interests the end user, he or she can click to call the number (step s27) via a mobile network voice channel (308), which will initially connect them to the call redirection server 304. The redirection server 304 uses the end-user's phone number to look up the database entry for the original advert (step s28). It then sends a message to the advertising server (step s29) informing it that the user, identified by the phone number, has clicked on the advert, before redirecting the call (step s30) to the telephone number stored in the database entry, for example the call centre 307. The advertising server logs the click through (step s31) and can then charge the advertiser and pay the message service provider according to the number of actual calls placed in response to the advert (step s32).

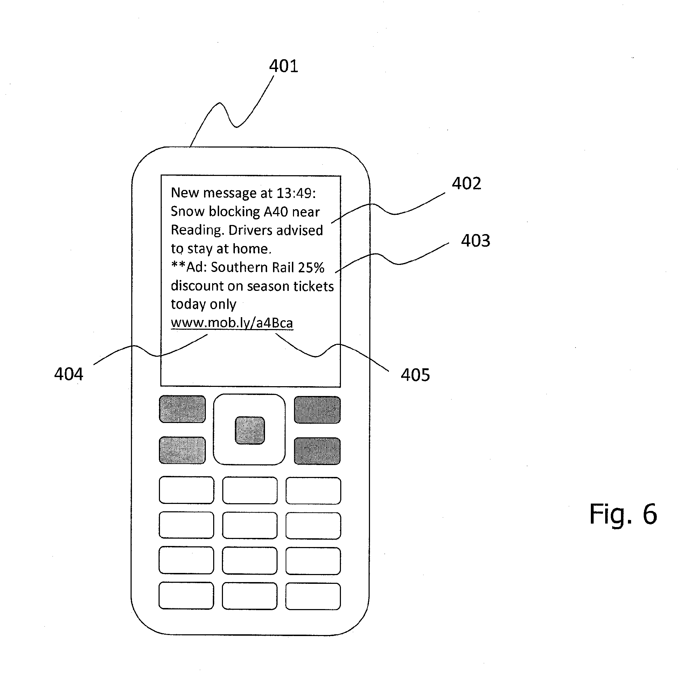

Figure 6 shows an example of a URL-based advert 403 after a message 402 received on a wireless device 401. The base URL 404 of the redirection server and the unique number 405 encoded in base 64 form the link. The original advertisement might be specified by the advertiser to include an original URL 406 as:
"Southern Rail 25% discount on season tickets today only
http://srail.mobi/signup?promo=790878"

When the user clicks on the link www.mob.ly/a4Bca, the redirection server 204 unpacks that to the original URL 406 and logs a click.

As mentioned previously, the user id may be appended to the original URL, so that, in the example above, it would become:
"http://srail.mobi/signup?promo=790878&id=447785394398"

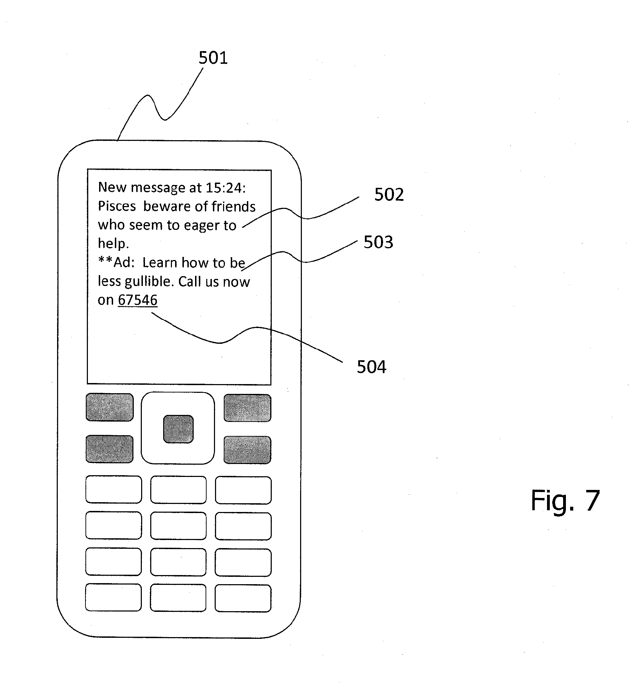

Figure 7 shows an example of a voice call-based advert 503 after the message 502 received at a wireless device 501. The number 504, in this case a voice shortcode, is clearly visible.

It will be understood by the skilled person that embodiments of the invention may be implemented in hardware or software, or a combination of the two, depending on the particular environment. For example, the functionality of each of the servers in the systems of Figures 2 and 4 may be implemented by software running on a general purpose server computer.

While embodiments of the invention have been described above, it will be appreciated by the skilled person that those embodiments may be modified or may include equivalent or alternative elements, while still falling within the scope of the invention as defined by the claims.

## Claims

1. A system for determining user response to wireless messages, comprising:
means for generating a wireless message (203, 303) including first content (402, 502) to be transmitted;
means for adding second content (403, 503) to the message, the second content including a link (405, 404; 504) to third content (406); and
means for transmitting the message to the user;
wherein, in response to activation of the link, information regarding link activation is arranged to be recorded in a storage means.

2. A system according to claim 1, wherein the link includes a URL of a redirection server (204).

3. A system according to claim 2, wherein the link further includes a reference to the third content, the third content being identified in a database (205).

4. A system according to claim 3, wherein the reference to the third content comprises an encoded identity of the third content.

5. A system according to claim 3 or 4, wherein in response to the link being activated, the redirection server is arranged to decode the reference to the identity and to retrieve the third content from the database based on the decoded identity.

6. A system according to any one of claims 2 to 5, wherein the redirection server is further arranged to store information that the link has been activated.

7. A system according to any one of the preceding claims, wherein the generating means comprises a message server (203, 303) that is arranged to request the second content from a content server (206, 306).

8. A system according to claim 7, wherein the message server is arranged to provide the content server with information identifying the user, or information identifying the number of users to whom the second content is to be sent.

9. A system according to claim 8, wherein the content server is arranged to select the third content and to record the identity of the third content in a database (206).

10. A system according to any one of the preceding claims, wherein the third content comprises a further link to fourth content.

11. A system according to claim 1, wherein the link comprises a telephone number of the redirection server (304).

12. A system according to claim 11, wherein, in response to receipt of a call at the redirection server (304) from the user's telephone number, the redirection server (304) is arranged to use the user's telephone number to look up the third content in the database, wherein the third content is referenced by the user's telephone number in the database.

13. A system according to claim 12, wherein the third content includes a telephone number for a call centre.

14. A system according to claim 12 or 13, wherein the redirection server is arranged to log with the content server that the link has been activated.

15. A method of determining user response to wireless messages, comprising:
generating a wireless message including first content to be transmitted;
adding second content to the message, the second content comprising a link to third content;
transmitting the message to the user; and
in response to activation of the link, storing information regarding the link activation.
